# EUROPEAN PATENT APPLICATION

(11) **EP 3 647 374 A1**
(43) Date of publication of application: **06.05.2020**
(21) Application number: 18824516.1
(22) Date of filing: 17.05.2018
(51) Int. Cl.: C09B 19/00, C09B 67/20, C09D 11/037, C09D 17/00

(54) **PIGMENT COMPOSITION AND PRINTING INK**

(30) Priority: 28.06.2017 JP 2017126266
(71) Applicant: DIC Corporation, Tokyo 174-8520 (JP)
(72) Inventor: KIKUCHI Hiromasa, Kamisu-shi Ibaraki 314-0193 (JP); OSHIUMI Isao, Kamisu-shi Ibaraki 314-0193 (JP); IGAWA Nobuo, Kamisu-shi Ibaraki 314-0193 (JP)
(74) Representative: Beckmann, Claus
(86) International application number: PCT/JP2018/019053
(87) International publication number: WO 2019/003693

(57) **Abstract**

A task to be achieved by the present invention is to provide a dioxazine violet pigment composition having excellent dispersion stability. More specifically, a task is to provide a dioxazine violet pigment composition with which viscosity can be kept at a level low enough practically, with respect to both of (1) the viscosity of a base ink over time and (2) the viscosity of a dilution of the base ink with ethyl acetate, a varnish or the like, when it is used in printing ink applications. The task is achieved by providing a pigment composition including a dioxazine violet pigment (C.I. Pigment Violet 23) and a multivalent metal inorganic salt.

## Description

### Technical Field

The present invention relates to a dioxazine violet pigment composition which can be used in a wide range of applications, such as a printing ink, a coating material, a colored molded article, and textile printing.

### Background Art

Generally, pigments aimed for coloring contain fine particles. For example, for obtaining an ink for printing, such as gravure printing or flexographic printing, or a coating material, when a pigment which is an aggregate of fine primary particles is dispersed in a medium, in order to divide the aggregate of particles into small ones, an effort is made to apply strong force to the pigment being dispersed for a long time, or to add a dispersant to the pigment.

Especially when using a dioxazine violet pigment, such as C.I. Pigment Violet 23, a severe problem about the fluidity is caused, and, for improving the fluidity, the use of a dioxazine violet pigment and a derivative of the dioxazine violet pigment in combination has been studied. As derivatives of the dioxazine violet pigment, sulfonic acid derivatives, sulfonamide derivatives, dialkylaminoalkyl derivatives, phthalimide alkyl derivatives and the like have been known.

However, even when employing the above-mentioned method of finely dividing the particles or method of using a pigment and a derivative of the pigment in combination, in some applications in which the pigment is used, the fluidity became poor due to thickening (viscosity increase).

Particularly, a printing ink using C.I. Pigment Violet 23 has a problem of the stability. An increase in the viscosity of ink could cause a dispersion failure in a dispersing machine or cause an apparatus to be stopped during the production of the ink, and hence is a problem that is strongly desired to be solved.

Under the circumstances, a method of using a dioxazine compound and a specific sulfonic acid derivative in combination (PTL 1) has been proposed.

However, satisfactory suppression of the viscosity increase from a practical point of view cannot be achieved even by the above method in some cases. More specifically, satisfactory suppression of the viscosity increase from a practical point of view has not been achieved by a conventional method with respect to any properties relating to the dispersibility required for a printing ink ((1) an aged viscosity as a base ink, (2) a viscosity of the base ink which is diluted with ethyl acetate, a varnish or the like, and the like) .

### Citation List

### Patent Literature

PTL 1: JP-A-5-98178

### Disclosure of Invention

### Technical Problem

In view of the above problems, a task to be achieved by the present invention is to provide a dioxazine violet pigment composition having excellent dispersion stability. More specifically, a task is to provide a dioxazine violet pigment composition with which viscosity can be kept at a level low enough practically, with respect to both of (1) the viscosity of a base ink over time and (2) the viscosity of a dilution of the base ink with ethyl acetate, a varnish or the like, when it is used in printing ink applications.

### Solution to Problem

The present inventors have conducted extensive and intensive studies on the surface state of organic pigment particles and the interaction between the components constituting a printing ink with a view toward finding a pigment composition having the above-mentioned properties which are satisfactory from a practical point of view. As a result, it has been found that the above-mentioned problems can be solved by using a multivalent metal inorganic salt in combination with C.I. Pigment Violet 23, and the present invention has been completed.

Specifically, the present invention is directed to:
"Item 1. A pigment composition including a dioxazine violet pigment (C.I. Pigment Violet 23) and a multivalent metal inorganic salt.
Item 2. The pigment composition according to Item 1 above, which further contains an alkylammonium salt of a C.I. Pigment Violet 23 sulfonic acid derivative.
Item 3. A method for producing the pigment composition according to Item 1 above, comprising adding a multivalent metal inorganic salt to an aqueous slurry of C. I. Pigment Violet 23 and uniformly stirring the resultant mixture.
Item 4. A colorant including at least the pigment composition according to any one of Items 1 to 3 above.
Item 5. A printing ink including the pigment composition according to any one of Items 1 to 3 above and a varnish."

### Advantageous Effects of Invention

The pigment composition of the invention exhibits a considerably remarkable effect such that a dioxazine violet pigment composition having excellent dispersion stability can be obtained. More specifically, when the dioxazine violet pigment is used in the printing ink application, satisfactory suppression of the viscosity increase from a practical point of view can be achieved with respect to both of (1) an aged viscosity as a base ink, and (2) a viscosity of the base ink which is diluted with ethyl acetate, a varnish or the like. Description of Embodiments

Hereinbelow, the present invention will be described in detail.

The present invention is directed to a pigment composition including C.I. Pigment Violet 23 and a multivalent metal inorganic salt. The pigment composition of the invention exhibits excellent dispersion stability when used as a printing ink or a coating material.

### <Description of C.I. Pigment Violet 23>

The C.I. Pigment Violet 23 used in the invention means an organic pigment represented by the chemical structural formula (I) below. With respect to the C.I. Pigment Violet 23, a commercially available product (for example, FASTOGEN SUPER VIOLET series (manufactured by DIC Corporation; specific surface area as measured by a BET method: 50 to 120 m²/g), or the like) may be used, or one which is produced by a known method commonly used may be used. The C.I. Pigment Violet 23 which is produced and then subjected to an appropriate known treatment may be used. The C.I. Pigment Violet 23 preferably has a specific surface area in the range of from 60 to 80 m²/g, as measured by a BET method, from the viewpoint of preventing the occurrence of aggregation of excessively fine particles and viscosity increase due to the aggregation while maintaining the transparency.

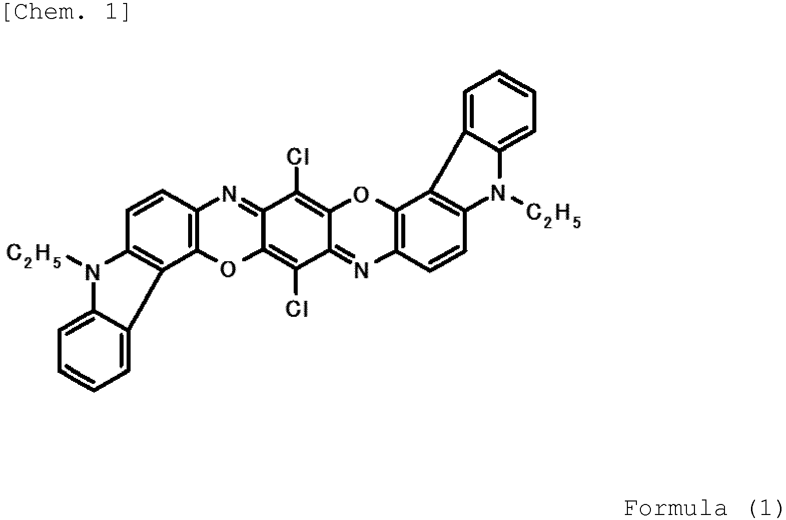

### <Description of the multivalent metal inorganic salt>

The present inventors have found that, in the case of a nitrocellulose (hereinafter, referred to as "NC") alcohol ink, by treating C. I. Pigment Violet 23 with a multivalent metal inorganic salt, the resultant ink can achieve remarkably excellent suppression of viscosity increase with respect to both the base ink aged viscosity and the viscosity of the diluted ink (diluted with ethyl acetate in the below-described Examples).

The polarization of the multivalent metal inorganic salt which has adsorbed on the surface of the C.I. Pigment Violet 23 and the polarization of a nitro group of the NC resin interact with each other, so that the C.I. Pigment Violet 23 adsorbs on the resin. Specifically, it is presumed that the multivalent metal inorganic salt increases an affinity of the surface of the pigment with the resin and this contributes to an improvement of the stability of the aged viscosity and the ethyl acetate diluted viscosity.

With respect to the multivalent metal inorganic salt used in the invention, any salt of a bivalent or multivalent metal cation and an inorganic acid anion can be used, and examples of metal cations include Be²⁺, Mg²⁺, Ca²⁺, Sr²⁺, Ba²⁺, Zn²⁺, Al³⁺, Cd²⁺, Fe²⁺, Fe³⁺, Co²⁺, Cr²⁺, Cr³⁺, Cr⁴⁺, Hg²⁺, Cu²⁺, Pb²⁺, Ni²⁺, and Mn²⁺, and examples of inorganic acid anions include F⁻, Cl⁻, Br⁻, I⁻, NO₃⁻, PO₄³⁻, HPO₄²⁻, H₂PO₄⁻, SO₄²⁻, HSO₄⁻, CO₃²⁻, and HCO₃⁻.

More specifically, there can be mentioned iron(II) sulfate, aluminum sulfate, potassium aluminum sulfate, copper(II) sulfate, iron(II) chloride, iron(III) chloride, zinc sulfate, and magnesium sulfate.

Especially, in view of obtaining a remarkable effect for ink viscosity reduction, iron(II) sulfate, aluminum sulfate, potassium aluminum sulfate, or copper(II) sulfate is preferably used.

With respect to the multivalent metal inorganic salt used in the invention, a multivalent metal inorganic salt may be solely used, or, if necessary, two or more multivalent metal inorganic salts can be used in combination.

### <Description of the amounts of the C.I. Pigment Violet 23 and multivalent metal inorganic salt incorporated>

The pigment composition of the invention preferably contains 0.1 to 5.0 parts by mass of the multivalent metal inorganic salt, relative to 100 parts by mass of the C.I. Pigment Violet 23, and, especially, in view of obtaining a remarkable effect for ink viscosity reduction, more preferably contains 0.3 to 3.0 parts by mass of the multivalent metal inorganic salt.

As a method for preparing the pigment composition of the invention, for example, there can be mentioned the following methods.
(A) A method in which a multivalent metal inorganic salt is added to a pigment slurry having a wet cake of C.I. Pigment Violet 23 suspended in water or the like and the resultant mixture is uniformly stirred, and then subjected to filtration, drying, and pulverization according to a general method to obtain a dioxazine violet pigment composition.
(B) A method in which an aqueous solution of a multivalent metal inorganic salt is sprayed to a wet cake of C.I. Pigment Violet 23 before being dried, and the resultant wet cake is subjected to drying and pulverization according to a general method to obtain a dioxazine violet pigment composition.
(C) A method in which the dried C.I. Pigment Violet 23 and a multivalent metal inorganic salt are subjected to dry mix without being ground using a blender, such as a Nauta mixer, a Henschel mixer, an air mix mixer, or a kneader.
(D) A method in which the dried pigment of C.I. Pigment Violet 23 and a multivalent metal inorganic salt which are individually prepared in advance are added at the same time when used in an ink, a coating material or the like.
(E) A method in which a multivalent metal inorganic salt is added to a pigment slurry having a wet cake of C.I. Pigment Violet 23 suspended in water or the like and the resultant mixture is uniformly stirred, and then sprayed and dried using a spin flash dryer, a spray dryer, or the like.

Among the above-mentioned methods for preparing the pigment composition, the method (A) is preferred from the viewpoint of achieving a uniform treatment of the C.I. Pigment Violet 23 pigment with a multivalent metal inorganic salt and dealing with the preparation within the range of general production process for C.I. Pigment Violet pigment.

Further, the present inventors have made studies on further improvement of the dispersion stability performance, and have found that, by adding an ammonium salt of a C. I. Pigment Violet 23 sulfonic acid derivative (structure shown below) to the above-mentioned pigment composition of the invention, a problem of viscosity increase caused upon color mixing of a violet ink containing the resultant C.I. Pigment Violet 23 and a blue ink containing copper phthalocyanine can be solved.

According to the studies made by the present inventors, such viscosity increase upon color mixing is caused as follows . Specifically, before color mixing, C.I. Pigment Violet 23 and copper phthalocyanine in their respective inks adsorb on the NC resin in a varnish and are dispersed and stabilized. Meanwhile, after color mixing, it is considered that the NC resin which has adsorbed on the C.I. Pigment Violet 23 is taken out by copper phthalocyanine having a stronger affinity with the NC resin, so that the C.I. Pigment Violet 23 suffers aggregation, causing viscosity increase.

Accordingly, it is presumed that a treatment of C.I. Pigment Violet 23 with an ammonium salt of a C.I. Pigment Violet 23 sulfonic acid derivative causes steric hindrance, and thus the mixed inks are unlikely to interact, preventing viscosity increase upon mixing the inks.

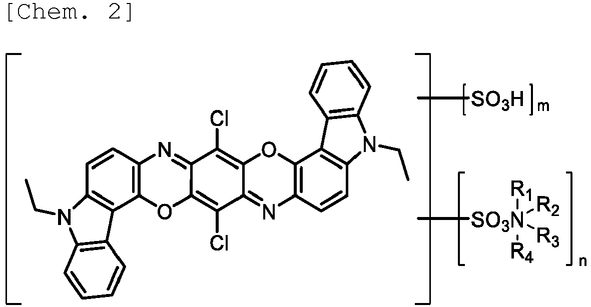

In the above formula, m is 0 to 3, n is 1 to 4, and the relationship: m + n = 1 to 4 is satisfied. Each of R₁, R₂, R₃, and R₄ is independently a hydrogen atom or C₁-C₂₀ alkyl. Preferably, R₁ to R₃ = H, and R₄ = C₁₂ alkyl.

The amount of the ammonium salt of the C.I. Pigment Violet 23 sulfonic acid derivative used in the treatment is preferably 0.5 to 15.0 parts by mass, further preferably 1.0 to 8.0 parts by mass, relative to 100 parts by mass of the C.I. Pigment Violet pigment.

With respect to the method for preparing the pigment composition of the invention containing C.I. Pigment Violet 23, a multivalent metal inorganic salt and further an ammonium salt of a C.I. Pigment Violet 23 sulfonic acid derivative, the pigment composition can be obtained by, for example, the method (A) which is a preferred preparation method, wherein an ammonium salt of a C.I. Pigment Violet 23 sulfonic acid derivative is added during the pulverization step. Alternatively, there is a method in which a multivalent metal inorganic salt and a C.I. Pigment Violet 23 sulfonic acid derivative are added to a pigment slurry having a wet cake of C.I. Pigment Violet 23 suspended in water or the like and the resultant slurry is uniformly stirred, and an amine or an ammonium salt is added and the resultant mixture is further stirred, and then subjected to filtration, drying, and pulverization according to a general method to obtain the pigment composition of the invention.

The pigment composition of the invention can further contain an additive, a dispersant or the like as long as the effects of the invention are not adversely affected, and can be controlled so that the pigment composition is suitable for the intended application.

The thus obtained pigment composition of the invention can be advantageously used in any of the applications that require a coloring function. For example, the pigment composition can be used in various known applications commonly used, such as a coating material, a printing ink, a colored molded article, a toner for electrostatic image development, a color filter for liquid crystal display device, and an aqueous ink for ink-jet recording.

The pigment composition of C.I. Pigment Violet 23 of the invention can provide a printing ink having both excellent initial viscosity and excellent stability with time. The printing ink can be prepared according to a conventional method by mixing into the pigment composition obtained by the method of the invention a certain type of a binder resin, a solvent, an additive and the like which are known and commonly used. Specifically, a liquid ink can be prepared by preparing a base ink for liquid ink having a high pigment concentration and using a certain type of a binder, a solvent, an additive and the like in the base ink.

The pigment composition of the invention can produce a base ink for an NC resin liquid ink having a low viscosity and excellent fluidity, and is advantageously used as an organic pigment composition for a gravure printing ink or a flexo printing ink. A base ink for an NC resin liquid ink comprises an NC resin (nitrogen content: 10.7 to 12.2), a solvent, and a pigment. A liquid ink can be produced by adding to the base ink for an NC resin liquid ink a certain type of a binder resin, a solvent, and a certain type of an additive. As a binder, for example, an NC resin, a polyamide resin, or a polyurethane resin can be used, and, as a solvent, there can be used, for example, an aromatic organic solvent, such as toluene or xylene; a ketone solvent, such as methyl ethyl ketone, methyl isobutyl ketone, cyclohexanone, 2-heptanone, or 3-heptanone; an ester solvent, such as ethyl acetate, n-propyl acetate, isopropyl acetate, or isobutyl acetate; an alcohol solvent, such as methanol, ethanol, n-propanol, isopropanol, n-butanol, isobutanol, or t-butanol; a glycol ether solvent, such as ethylene glycol monomethyl ether, ethylene glycol monoethyl ether, ethylene glycol mono-n-propyl ether, ethylene glycol mono-i-propyl ether, ethylene glycol mono-n-butyl ether, ethylene glycol mono-i-butyl ether, ethylene glycol mono-t-butyl ether, propylene glycol monomethyl ether, propylene glycol monoethyl ether, propylene glycol mono-n-propyl ether, propylene glycol mono-i-propyl ether, propylene glycol mono-n-butyl ether, propylene glycol mono-i-butyl ether, propylene glycol mono-t-butyl ether, ethylene glycol dimethyl ether, ethylene glycol diethyl ether, ethylene glycol di-n-propyl ether, ethylene glycol di-i-propyl ether, ethylene glycol di-n-butyl ether, ethylene glycol di-i-butyl ether, ethylene glycol di-t-butyl ether, propylene glycol dimethyl ether, propylene glycol diethyl ether, propylene glycol di-n-propyl ether, propylene glycol di-i-propyl ether, propylene glycol di-n-butyl ether, propylene glycol di-i-butyl ether, propylene glycol di-t-butyl ether, diethylene glycol monomethyl ether, diethylene glycol monoethyl ether, diethylene glycol mono-n-propyl ether, diethylene glycol mono-i-propyl ether, diethylene glycol mono-n-butyl ether, diethylene glycol mono-i-butyl ether, diethylene glycol mono-t-butyl ether, diethylene glycol dimethyl ether, diethylene glycol diethyl ether, diethylene glycol di-n-propyl ether, diethylene glycol di-i-propyl ether, diethylene glycol di-n-butyl ether, diethylene glycol di-i-butyl ether, diethylene glycol di-t-butyl ether, dipropylene glycol monomethyl ether, dipropylene glycol monoethyl ether, dipropylene glycol mono-n-propyl ether, dipropylene glycol mono-i-propyl ether, dipropylene glycol mono-n-butyl ether, dipropylene glycol mono-i-butyl ether, dipropylene glycol mono-t-butyl ether, dipropylene glycol dimethyl ether, dipropylene glycol diethyl ether, dipropylene glycol di-n-propyl ether, dipropylene glycol di-i-propyl ether, dipropylene glycol di-n-butyl ether, dipropylene glycol di-i-butyl ether, dipropylene glycol di-t-butyl ether, ethylene glycol monomethyl ether acetate, ethylene glycol monoethyl ether acetate, propylene glycol monoethyl ether acetate, propylene glycol monomethyl ether acetate, diethylene glycol monomethyl ether acetate, or diethylene glycol monoethyl ether acetate, or the like.

When the pigment composition of the invention is used as a printing ink, a printing ink using the above-prepared pigment composition of the invention, which is diluted with ethyl acetate, a polyurethane varnish, or a polyamide varnish, can be used. In the preparation of a printing ink, a known method commonly used can be employed.

When a coating material is prepared from the pigment composition of the invention as a colorant, examples of resins used in the coating material include various resins, such as an acrylic resin, a melamine resin, an epoxy resin, a polyester resin, a polyurethane resin, a polyamide resin, and a phenolic resin.

Examples of solvents used in a coating material include aromatic solvents, such as toluene, xylene, and methoxybenzene; acetate solvents, such as ethyl acetate, butyl acetate, propylene glycol monomethyl ether acetate, and propylene glycol monoethyl ether acetate; propionate solvents, such as ethoxyethyl propionate; alcohol solvents, such as methanol, ethanol, propanol, n-butanol, and isobutanol; ether solvents, such as butyl cellosolve, propylene glycol monomethyl ether, diethylene glycol ethyl ether, and diethylene glycol dimethyl ether; ketone solvents, such as methyl ethyl ketone, methyl isobutyl ketone, and cyclohexanone; aliphatic hydrocarbon solvents, such as hexane; nitrogen compound solvents, such as N,N-dimethylformamide, γ-butyrolactam, N-methyl-2-pyrrolidone, aniline, and pyridine; lactone solvents, such as γ-butyrolactone; carbamates, such as a 48:52 mixture of methyl carbamate and ethyl carbamate; and water. As the solvent, particularly, a polar solvent soluble in water, such as a propionate, alcohol, ether, ketone, nitrogen compound, or lactone solvent or water, is suitable.

Further, when a pigment additive and/or the pigment composition is dispersed or mixed in a resin in a liquid state to obtain a resin composition for coating material, a general additive, for example, a dispersant, a filler, a coating material auxiliary, a drying agent, a plasticizer and/or an auxiliary pigment can be used. This is achieved by adding individual components or a combination of some of them, or all components, or adding all of them at the same time and dispersing or mixing them.

Examples of dispersing machines for dispersing the pigment composition include known dispersing machines, such as a disper, a homomixer, a paint conditioner, a Skandex, a bead mill, an attritor, a ball mill, a two-roll mill, a three-roll mill, and a pressure kneader, but the dispersing machine is not limited to these machines. In dispersing the pigment composition of the invention, a resin and a solvent are added to the pigment composition so as to have a viscosity such that the composition can be dispersed by the above dispersing machine, and the composition is dispersed. The high-concentration coating material base obtained after being dispersed has a solids content of 5 to 20%, and a resin and a solvent are further added to the coating material base and the resultant mixture is used as a coating material.

Hereinbelow, the present invention will be described in more detail with reference to the following Examples and Comparative Examples. In the following Examples and Comparative Examples, "%" indicates "% by mass" unless otherwise specified.

In the present Examples, the measurement of a metal content of a pigment composition was performed by fluorescent X-ray measurement.

Details are as follows.

Fe, Cu, and Zn contents: These were measured by means of a fluorescent X-ray analyzer Epsilon 5 (manufactured by PANalytical B.V.). Using about 1,000 mg of the prepared pigment powder, a tablet having a sample diameter of 19 mm was prepared and used in the measurement.

Al and Mg contents: These were measured by means of a fluorescent X-ray analyzer ZSX100e (manufactured by Rigaku Corporation). Using about 200 mg of the prepared pigment powder, a tablet having a sample diameter of 13 mm was prepared and used in the measurement.

In the measurement of a specific surface area of a pigment by a BET method, using about 100 mg of a pigment powder, a specific surface area was measured by means of a specific surface area measurement apparatus Macsorb HM model-1220 (manufactured by MOUNTECH Co., Ltd.).

### [Example 1]

Water was added to a wet cake (pigment content: 60 parts) of C.I. Pigment Violet 23 (manufactured by DIC Corporation; specific surface area as measured by a BET method: 75 m²/g) so that the total amount became 1,000 parts, and the resultant mixture was subjected to deflocculation in a stainless steel cup using Homogenizing Disper Model 2.5 (manufactured by PRIMIX Corporation) for 30 minutes. 1.8 Parts of iron(II) sulfate heptahydrate (manufactured by Wako Pure Chemical Industries, Ltd.) was added to the mixture, followed by stirring for one hour. The resultant slurry was subjected to filtration using a Nutsche, and the collected material was subjected to air blast drying (98°C, 18 hours), and pulverized to obtain 60 parts of a C.I. Pigment Violet 23 pigment composition (A-1). The obtained pigment composition had an Fe content of 2,470 ppm. The amount of iron(II) sulfate heptahydrate calculated from the Fe content was 1.2 parts, relative to 100 parts of the C.I. Pigment Violet 23.

### [Example 2]

Substantially the same procedure as in [Example 1] above was conducted except that the amount of the iron(II) sulfate heptahydrate added was changed to 3.6 parts, obtaining 60 parts of a C.I. Pigment Violet 23 pigment composition (A-2). The obtained pigment composition had an Fe content of 3,480 ppm. The amount of iron(II) sulfate heptahydrate calculated from the Fe content was 1.7 parts, relative to 100 parts of the C.I. Pigment Violet 23.

### [Example 3]

Substantially the same procedure as in [Example 1] above was conducted except that the amount of the iron(II) sulfate heptahydrate added was changed to 5.4 parts, obtaining 60 parts of a C.I. Pigment Violet 23 pigment composition (A-3). The obtained pigment composition had an Fe content of 4,190 ppm. The amount of iron(II) sulfate heptahydrate calculated from the Fe content was 2.1 parts, relative to 100 parts of the C.I. Pigment Violet 23.

### [Example 4]

Substantially the same procedure as in [Example 1] above was conducted except that the amount of the iron(II) sulfate heptahydrate added was changed to 7.2 parts, obtaining 60 parts of a C.I. Pigment Violet 23 pigment composition (A-4). The obtained pigment composition had an Fe content of 4,760 ppm. The amount of iron(II) sulfate heptahydrate calculated from the Fe content was 2.4 parts, relative to 100 parts of the C.I. Pigment Violet 23.

### [Example 5]

Substantially the same procedure as in [Example 1] above was conducted except that the iron(II) sulfate heptahydrate was changed to 3.6 parts of aluminum sulfate tetradeca- to octadecahydrate (manufactured by Wako Pure Chemical Industries, Ltd.), obtaining 60 parts of a C.I. Pigment Violet 23 pigment composition (A-5). The obtained pigment composition had an Al content of 484 ppm. The amount of aluminum sulfate hexadecahydrate calculated from the Al content was 0.6 part, relative to 100 parts of the C.I. Pigment Violet 23.

### [Example 6]

Substantially the same procedure as in [Example 1] above was conducted except that the iron(II) sulfate heptahydrate was changed to 5.4 parts of aluminum sulfate tetradeca- to octadecahydrate (manufactured by Wako Pure Chemical Industries, Ltd.), obtaining 60 parts of a C.I. Pigment Violet 23 pigment composition (A-6). The obtained pigment composition had an Al content of 750 ppm. The amount of aluminum sulfate hexadecahydrate calculated from the Al content was 0.9 part, relative to 100 parts of the C.I. Pigment Violet 23.

### [Example 7]

Substantially the same procedure as in [Example 1] above was conducted except that the iron(II) sulfate heptahydrate was changed to 5.4 parts of potassium aluminum sulfate (manufactured by Wako Pure Chemical Industries, Ltd.), obtaining 60 parts of a C.I. Pigment Violet 23 pigment composition (A-7). The obtained pigment composition had an Al content of 981 ppm. The amount of potassium aluminum sulfate calculated from the Al content was 1.7 parts, relative to 100 parts of the C.I. Pigment Violet 23.

### [Example 8]

Substantially the same procedure as in [Example 1] above was conducted except that the iron(II) sulfate heptahydrate was changed to 3.6 parts of copper (II) sulfate (manufactured by Wako Pure Chemical Industries, Ltd.), obtaining 60 parts of a C.I. Pigment Violet 23 pigment composition (A-8). The obtained pigment composition had a Cu content of 5,713 ppm. The amount of copper (II) sulfate calculated from the Cu content was 1.4 parts, relative to 100 parts of the C.I. Pigment Violet 23.

### [Example 9]

Substantially the same procedure as in [Example 1] above was conducted except that the iron(II) sulfate heptahydrate was changed to 3.6 parts of zinc sulfate heptahydrate (manufactured by Wako Pure Chemical Industries, Ltd.), obtaining 60 parts of a C.I. Pigment Violet 23 pigment composition (A-9) . The obtained pigment composition had a Zn content of 5,923 ppm. The amount of zinc sulfate heptahydrate calculated from the Zn content was 2.6 parts, relative to 100 parts of the C.I. Pigment Violet 23.

### [Example 10]

Substantially the same procedure as in [Example 1] above was conducted except that the iron(II) sulfate heptahydrate was changed to 3.6 parts of magnesium sulfate (manufactured by Wako Pure Chemical Industries, Ltd.), obtaining 60 parts of a C.I. Pigment Violet 23 pigment composition (A-10). The obtained pigment composition had a Mg content of 2,298 ppm. The amount of magnesium sulfate calculated from the Mg content was 1.1 parts, relative to 100 parts of the C.I. Pigment Violet 23.

### [Example 11]

Substantially the same procedure as in [Example 1] above was conducted except that the iron(II) sulfate heptahydrate was changed to 4.0 parts of iron(II) chloride (manufactured by Wako Pure Chemical Industries, Ltd.), obtaining 60 parts of a C.I. Pigment Violet 23 pigment composition (A-11). The obtained pigment composition had an Fe content of 6,359 ppm. The amount of iron (II) chloride calculated from the Fe content was 1.4 parts, relative to 100 parts of the C.I. Pigment Violet 23.

### [Example 12]

Substantially the same procedure as in [Example 1] above was conducted except that the iron(II) sulfate heptahydrate was changed to 5.4 parts of iron(III) chloride (manufactured by Wako Pure Chemical Industries, Ltd.), obtaining 60 parts of a C.I. Pigment Violet 23 pigment composition (A-12). The obtained pigment composition had an Fe content of 6,892 ppm. The amount of iron (III) chloride calculated from the Fe content was 2.0 parts, relative to 100 parts of the C.I. Pigment Violet 23.

### [Preparation Example 1]

Water was added to a wet cake (dye content: 60 parts) of C.I. Pigment Violet 23 sulfonic acid derivative (manufactured by DIC Corporation) so that the total amount became 3,600 parts, and the resultant mixture was stirred in a stainless steel cup using an anchor agitating blade while heating at 80°C for one hour. Separately, 19 parts of acetic acid (manufactured by Wako Pure Chemical Industries, Ltd.), 720 parts of water, and 45 parts of FARMIN 20D (manufactured by Kao Corporation) were placed in a beaker and the resultant mixture was stirred while heating at 80°C for one hour. All of the solution of FARMIN 20D was added to the slurry of the C.I. Pigment Violet 23 sulfonic acid derivative, followed by stirring for one hour. The resultant slurry was subjected to filtration using a Nutsche, and the collected material was washed with 4,800 parts of water. The collected material was subjected to air blast drying (98°C, 18 hours) to obtain 96 parts of a dodecylammonium salt of a C.I. Pigment Violet 23 sulfonic acid derivative.

### [Example 13]

Water was added to a wet cake (pigment content: 60 parts) of C.I. Pigment Violet 23 (manufactured by DIC Corporation; specific surface area as measured by a BET method: 75 m2/g) so that the total amount became 1,000 parts, and the resultant mixture was subjected to deflocculation in a stainless steel cup using Homogenizing Disper Model 2.5 (manufactured by PRIMIX Corporation) for 30 minutes. 3.6 Parts of iron(II) sulfate heptahydrate (manufactured by Wako Pure Chemical Industries, Ltd.) was added to the mixture, followed by stirring for one hour. The resultant slurry was subjected to filtration using a Nutsche, and the collected material was subjected to air blast drying (98°C, 18 hours) . To the obtained dried material of the pigment which was being pulverized was added 3.0 parts of a dodecylammonium salt of a C.I. Pigment Violet 23 sulfonic acid, followed by pulverization, to obtain 60 parts of a C.I. Pigment Violet 23 pigment composition (A-13) . The obtained pigment composition had an Fe content of 3,290 ppm. The amount of iron(II) sulfate heptahydrate calculated from the Fe content was 1.6 parts, relative to 100 parts of the C.I. Pigment Violet 23.

### [Example 14]

Substantially the same procedure as in [Example 9] above was conducted except that the iron(II) sulfate heptahydrate was changed to 3.6 parts of aluminum sulfate tetradeca- to octadecahydrate (manufactured by Wako Pure Chemical Industries, Ltd.), obtaining 60 parts of a C. I. Pigment Violet 23 pigment composition (A-14). The obtained pigment composition had an Al content of 472 ppm. The amount of aluminum sulfate hexadecahydrate calculated from the Al content was 0.6 part, relative to 100 parts of the C.I. Pigment Violet 23.

### [Example 15]

0.9 Part of iron (II) sulfate heptahydrate was mixed into 60 parts of a dried material of C.I. Pigment Violet 23, followed by pulverization, to obtain 60 parts of a C.I. Pigment Violet 23 pigment composition (A-15). The obtained pigment composition had an Fe content of 2,941 ppm. The amount of iron(II) sulfate heptahydrate calculated from the Fe content was 1.5 parts, relative to 100 parts of the C.I. Pigment Violet 23.

### [Example 16]

Water was added to a wet cake (pigment content: 60 parts) of C.I. Pigment Violet 23 (manufactured by DIC Corporation; specific surface area as measured by a BET method: 65 m²/g) so that the total amount became 1,000 parts, and the resultant mixture was subjected to deflocculation in a stainless steel cup using Homogenizing Disper Model 2.5 (manufactured by PRIMIX Corporation) for 30 minutes. 3.6 Parts of iron(II) sulfate heptahydrate (manufactured by Wako Pure Chemical Industries, Ltd.) was added to the mixture, followed by stirring for one hour. The resultant slurry was subjected to filtration using a Nutsche, and the collected material was subjected to air blast drying (98°C, 18 hours) . To the obtained dried material of the pigment which was being pulverized was added 3.0 parts of a dodecylammonium salt of a C.I. Pigment Violet 23 sulfonic acid, followed by pulverization, to obtain 60 parts of a C.I. Pigment Violet 23 pigment composition (A-16). The obtained pigment composition had an Fe content of 3,101 ppm. The amount of iron(II) sulfate heptahydrate calculated from the Fe content was 1.5 parts, relative to 100 parts of the C.I. Pigment Violet 23.

### [Comparative Example 1]

A wet cake (pigment content: 60 parts) of C.I. Pigment Violet 23 (manufactured by DIC Corporation; specific surface area as measured by a BET method: 75 m²/g) was subjected to air blast drying (98°C, 18 hours), and pulverized to obtain 60 parts of C.I. Pigment Violet 23.

### [Preparation of various inks]

### (Preparation of an NC ethanol varnish)

250 Parts of an NC resin (nitrogen content: 10.7 to 12.2; nonvolatile content: 70%; volatile component: ethanol), 436.5 parts of ethanol (manufactured by Wako Pure Chemical Industries, Ltd.), and 13.5 parts of ethyl acetate (manufactured by Wako Pure Chemical Industries, Ltd.) were placed in a 1 L plastic bottle and dispersed using a paint shaker (manufactured by Toyo Seiki Seisaku-Sho, Ltd.) for 2 hours to obtain an NC ethanol varnish.

### (Preparation of an NC glycol ether varnish)

164.5 Parts of an NC resin (nitrogen content: 10.7 to 12.2; nonvolatile content: 70%; volatile component: isopropanol) and 335.5 parts of propylene glycol monoethyl ether (manufactured by Wako Pure Chemical Industries, Ltd.) were placed in a 1 L plastic bottle and dispersed using a paint shaker (manufactured by Toyo Seiki Seisaku-Sho, Ltd.) for 2 hours to obtain an NC glycol ether varnish.

### (Preparation of a violet NC ethanol base ink)

With respect to each of the pigment compositions obtained in Examples 1 to 16 and Comparative Example 1 (C.I. Pigment Violet 23, untreated), 22 parts of the pigment composition, 40 parts of the NC ethanol varnish, 36.9 parts of ethanol (manufactured by Wako Pure Chemical Industries, Ltd.), 1.1 parts of ethyl acetate (manufactured by Wako Pure Chemical Industries, Ltd.), and 150 parts of SAZ beads (zirconia YTZ balls 1.25φ, manufactured by Tokyo Garasu Kikai Co., Ltd.) were placed in a 200 mL glass bottle and dispersed using Shaker Skandex SK550 (manufactured by Fast & Fluid Management B. V. Company) for 2 hours to obtain a violet NC ethanol base ink.

### (Preparation of a violet NC glycol base ink)

With respect to each of the pigment composition obtained in Example 5 and Comparative Example 1 (C.I. Pigment Violet 23, untreated), 18.2 parts of the pigment composition, 32.5 parts of the NC glycol ether varnish, 40.3 parts of propylene glycol monoethyl ether (manufactured by Wako Pure Chemical Industries, Ltd.), 9.0 parts of n-propanol (manufactured by Wako Pure Chemical Industries, Ltd.) , and 150 parts of SAZ beads (zirconia YTZ balls 1.25φ, manufactured by Tokyo Garasu Kikai Co., Ltd.) were placed in a 200 mL glass bottle and dispersed using Shaker Skandex SK550 (manufactured by Fast & Fluid Management B. V. Company) for 2 hours to obtain a violet NC glycol base ink.

### (Preparation of an ethyl acetate diluted ink)

38.5 Parts of the above-obtained violet NC ethanol base ink and 16.5 parts of ethyl acetate (manufactured by Wako Pure Chemical Industries, Ltd.) were placed in a 100 mL plastic bottle and dispersed using a paint shaker (manufactured by Toyo Seiki Seisaku-Sho, Ltd.) for 10 seconds to obtain an ethyl acetate diluted ink.

### (Preparation of a blue base ink)

22 Parts of C.I. Pigment Blue 15:4 (manufactured by DIC Corporation), 40 parts of the NC ethanol varnish, 36.9 parts of ethanol (manufactured by Wako Pure Chemical Industries, Ltd.), 1.1 parts of ethyl acetate (manufactured by Wako Pure Chemical Industries, Ltd.), and 150 parts of SAZ beads (zirconia YTZ balls 1.25φ, manufactured by Tokyo Garasu Kikai Co., Ltd.) were placed in a 200 mL glass bottle and dispersed using Shaker Skandex SK550 (manufactured by Fast & Fluid Management B. V. Company) for 2 hours to obtain a blue base ink.

### (Preparation of a mixed color ink)

28 Parts of the violet NC ethanol base ink, 12 parts of the blue base ink, and 20 parts of ethanol (manufactured by Wako Pure Chemical Industries, Ltd.) were placed in a 100 mL plastic bottle and dispersed using a paint shaker (manufactured by Toyo Seiki Seisaku-Sho, Ltd.) for 10 seconds to obtain a mixed color ink.

### [Results of the measurement of viscosity for various inks]

### (Base ink aged viscosity)

The above-obtained violet NC ethanol base ink and NC glycol base ink were allowed to stand at room temperature for 24 hours, and then allowed to stand in a thermostatic chamber at 20°C for one hour or longer, and a viscosity of each of the resultant base inks was measured by means of an R85 viscometer RB85L (manufactured by Toki Sangyo Co., Ltd.) . The lower the viscosity, the more excellent the ink. The evaluations shown in Tables 1 and 2 were made according to the following criteria.

### • Evaluation of the base ink aged viscosity (viscosity at 6 rpm (unit: mPa•s) )

AA: Less than 1,000
A: 1,000 to less than 5,000
B: 5,000 to less than 10,000
C: 10,000 or more

### (Ethyl acetate diluted viscosity)

The above-obtained ethyl acetate diluted ink was allowed to stand in a thermostatic chamber at 20°C for one hour or longer, and a viscosity of the resultant ink was measured by means of an R85 viscometer RB85L (manufactured by Toki Sangyo Co., Ltd.). The lower the viscosity, the more excellent the ink. The evaluations shown in Table 1 were made according to the following criteria.

### • Evaluation of the ethyl acetate diluted viscosity (viscosity at 6 rpm (unit: mPa•s))

AA: Less than 1,000
A: 1,000 to less than 10,000
B: 10,000 to less than 25,000
C: 25,000 or more

The ethyl acetate diluted viscosity in Comparative Example 1 was much larger than 40,000.

**[Table 1]**

| | Aged viscosity of violet NC ethanol base ink | Ethyl acetate diluted viscosity |
|---|---|---|
| Example 1 | AA | A |
| Example 2 | AA | AA |
| Example 3 | AA | A |
| Example 4 | A | A |
| Example 5 | AA | AA |
| Example 6 | AA | AA |
| Example 7 | AA | A |
| Example 8 | AA | AA |
| Example 9 | B | B |
| Example 10 | A | B |
| Example 11 | A | B |
| Example 12 | B | B |
| Example 13 | B | AA |
| Example 14 | A | AA |
| Example 15 | AA | A |
| Example 16 | A | AA |
| Comparative Example 1 | C | C |

**[Table 2]**

| | Aged viscosity of violet NC glycol base ink |
|---|---|
| Example 1 | A |
| Comparative Example 1 | C |

### (Mixed color ink aged viscosity)

With respect to the above-obtained mixed color ink, a viscosity (25°C) of each of the ink immediately after prepared, the ink which had been allowed to stand at room temperature for 3 hours, and the ink which had been allowed to stand at room temperature for 24 hours was measured using a Zahn cup (No. 4, manufactured by Rigo Co., Ltd.) . In the table below, the lower the value of viscosity, the more excellent the ink.

**[Table 3]**

| | Viscosity (s) | | |
|---|---|---|---|
| | Immediately after preparation | After 3 hours | After 24 hours |
| Example 13 | 9 | 9 | 9 |
| Example 14 | 9 | 9 | 9 |
| Example 16 | 9 | 9 | 9 |
| Comparative Example 1 | 9 | 30 | Unmeasurable |

## Claims

1. A pigment composition comprising C.I. Pigment Violet 23 and a multivalent metal inorganic salt.

2. The pigment composition according to claim 1, wherein the multivalent metal inorganic salt is at least one selected from the group consisting of iron(II) sulfate, aluminum sulfate, potassium aluminum sulfate, copper(II) sulfate, iron(II) chloride, iron(III) chloride, zinc sulfate, and magnesium sulfate.

3. The pigment composition according to claim 1 or 2, which contains 0.1 to 5.0 parts by mass of the multivalent metal inorganic salt, relative to 100 parts by mass of the C.I. Pigment Violet 23.

4. The pigment composition according to any one of claims 1 to 3, which further contains an alkylammonium salt of a C.I. Pigment Violet 23 sulfonic acid derivative.

5. A method for producing a pigment composition comprising C.I. Pigment Violet 23 and a multivalent metal inorganic salt, the method comprising adding a multivalent metal inorganic salt to an aqueous slurry of C.I. Pigment Violet 23 and uniformly stirring the resultant mixture.

6. A colorant comprising at least the pigment composition according to any one of claims 1 to 4.

7. A printing ink comprising the pigment composition according to any one of claims 1 to 4 and a varnish.
